# EUROPEAN PATENT SPECIFICATION

(11) **EP 4 576 497 B1**
(45) Date of publication and mention of the grant of the patent: **28.10.2026**
(21) Application number: 25168295.1
(22) Date of filing: 12.09.2018
(51) Int. Cl.: H04R 25/00, H02J 7/00, H02J 50/10

(54) **A METHOD FOR INDUCTIVE CHARGING OF A RECHARGEABLE HEARING INSTRUMENT**
VERFAHREN ZUM INDUKTIVEN LADEN EINES WIEDERAUFLADBAREN HÖRGERÄTS
PROCÉDÉ DE CHARGE INDUCTIVE D'UN INSTRUMENT AUDITIF RECHARGEABLE

(30) Priority: 15.09.2017 EP 17191283
(43) Date of publication of application: 25.06.2025
(62) Document number(s) of the earlier application(s) in accordance with Art. 76 EPC: 18765649.1 / 3 682 650
(73) Proprietor: GN Hearing A/S, 2750 Ballerup (DK)
(72) Inventor: Johansen, Jan, 2750 Ballerup (DK); Ell, Søren Christian, 2750 Ballerup (DK)
(74) Representative: GN Store Nord A/S

(56) References cited:
- DE-A1- 102015 203 536
- US-A1- 2016 269 836

## Description

### TECHNICAL FIELD

The present disclosure relates to a method for inductive charging of a rechargeable hearing instrument.

### BACKGROUND

Hearing instruments (HI) require energy to function properly. Traditionally, the energy is provided by a battery, either disposable or rechargeable, the latter normally offering superior user experience. These rechargeable batteries are normally replenished using conventional, galvanic charging technology. Recently, however, wireless, and in particular inductive, charging has seen increased popularity, also in the field of hearing instruments.

Typically, charging of a rechargeable hearing instrument is enabled by means of a portable charging unit. As is widely known in the art, different types of hearing instruments, e.g. Behind-the-ear (BTE), Completely-in-the-canal (CIC), Receiver-in-ear (RIE), are purposefully designed and built in a different manner, with components being placed at the most suitable place for each particular type of device. In the same context, charging units are designed in parallel with the corresponding hearing instrument and with a tailored set of functionalities in order to maximally conform to the technical specification of the corresponding hearing instrument.

DE102015203536 discloses an adapter with an inductive coil for enabling inductive charging of a hearing aid. DE102015203536 primarily targets charging of the hearing aid while the aid is in use, i.e. arranged at the ear. As a consequence, the adapter is in preferred embodiments hook-shaped so that it, when attached to the hearing aid itself, may stay in place at the ear. A base part is used for galvanically supplying power to the adapter. To this purpose, the adapter, when in engagement with the hearing aid, is positioned in indentations provided in the base part.

In conformity with other documents belonging to the prior art, DE102015203536 fails to provide a universal inductive charging solution. In particular, DE102015203536 doesn't disclose a charging solution able to efficiently deal with different coil parameters, e.g. number of windings in the coil, thickness of the coil thread, size and general shape of the coil. Here, coil parameters and hence coil performance are typically selected so as to comply with the requirements of the specific HI-model.

US 2016/269836 relates to a wireless charging system for hearing instruments freely positionable in a charging device.

### SUMMARY

It is an object of the present disclosure to at least alleviate above-identified and other drawbacks associated with the current art.

The above stated objective is achieved by means of the method according to the independent claim, and by the embodiments according to the dependent claims.

More specifically, the present disclosure provides a method for inductively charging a rechargeable hearing instrument having an inductive coil by means of a charging kit. The charging kit comprises a current-generating base unit comprising a first cavity and an adapter adapted or configured to be received in said first cavity, wherein the energy is transferrable from the base unit to the adapter when the adapter is received in the first cavity. The adapter and/or the base unit is further provided with an inductive coil, and the adapter comprises a second cavity adapted to receive the rechargeable, inductively-charged hearing instrument. The method comprises the acts or steps of inserting the hearing instrument into the second cavity of the adapter, inserting the adapter into the first cavity of the base unit, determining characteristics of the inductive coil of the hearing instrument, on the basis of the determined characteristics of the inductive coil, configuring characteristics of the current generated by the base unit so as to correspond to the characteristics of the inductive coil of the hearing instrument, and inductively charging the rechargeable hearing instrument.

It is to be noted that the method steps do not have to take place in a specific order, such as the order indicated above, for the method to be properly executed. In particular, the adapter may be inserted into the first cavity of the base unit prior to inserting the hearing instrument into the second cavity belonging to the adapter. In the following, positive effects and advantages are presented.

On a general level, a charging solution consisting of two separate parts (base unit and adapter) is desirable as it contributes in avoiding strong constraints when designing the hearing instruments/chargers. More specifically and as is known in the art, a substantial number of components is required to render inductive charging of the hearing instrument possible, both with regards to energy conversion, but also with respect to added functionality such as charger-device communication during charging, e.g. to inform on battery level in the hearing instrument. Advantageously, a majority of these components is placed in the base unit that inherently is of considerable size. In the same context, as few components as possible should be placed in the relatively small adapter.

With respect to the inductive coil and as discussed above, inductive coils of different hearing instruments have different characteristics. Accordingly, by receiving relevant information regarding characteristics of the inductive coil integrated in the hearing instrument, the base unit may configure the characteristics of the current it generates so that it corresponds to the characteristic of the inductive coil integrated in the hearing instrument.

Here, one pertinent characteristic of the inductive coil integrated in the hearing instrument is its operational frequency, i.e. the frequency of the AC current resulting in optimal inductive energy transfer.

In this way, a single base unit may be used for charging across the entire product portfolio of hearing instruments, as all base units (holding the majority of the required components) are identical, both in terms of appearance as well as the components integrated therein, whereas the adapters are HI-specific and typically differ in shape and positioning of the inductive coil.

Further advantages and features of embodiments will become apparent when reading the following detailed description in conjunction with the drawings.

### BRIEF DESCRIPTION OF THE DRAWINGS

Fig. 1 is a perspective view of a charging kit for an inductively-charged hearing instrument and a rechargeable hearing instrument itself.
Fig. 2 is a perspective view of a coil of an inductively-charged hearing instrument of the BTE-type.
Fig. 3 shows a flow chart of the method for inductively charging a rechargeable hearing instrument according to one embodiment of the present disclosure.

### DETAILED DESCRIPTION

Various exemplary embodiments and details are described hereinafter, with reference to the figures when relevant The disclosed method, systems, and devices may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

A method for inductively charging a rechargeable hearing instrument having an inductive coil (first inductive coil) by means of a charging kit, said charging kit comprising a current-generating base unit comprising a first cavity, an adapter adapted to be received in said first cavity, wherein energy is transferrable from the base unit to the adapter when the adapter is received in the first cavity, the adapter further being provided with an inductive coil (second inductive coil), and wherein the adapter comprises a second cavity adapted to receive the rechargeable, inductively-charged hearing instrument. The method comprises the steps of inserting the hearing instrument into the second cavity of the adapter, inserting the adapter into the first cavity of the base unit, determining characteristics of the (first) inductive coil of the hearing instrument, on the basis of the determined characteristics of the (first) inductive coil, configuring characteristics of the current generated by the base unit so as to correspond to the characteristics of the (first) inductive coil of the hearing instrument, and inductively charging the rechargeable hearing instrument, optionally according to the characteristics of the current generated by the base unit.

A method for inductively charging a rechargeable hearing instrument is disclosed. The hearing instrument may be a hearable or a hearing aid, wherein the processor is configured to compensate for a hearing loss of a user. The hearing aid or hearable may be of the behind-the-ear (BTE) type, in-the-ear (ITE) type, in-the-canal (ITC) type, receiver-in-canal (RIC) type or receiver-in-the-ear (RITE) type. The hearing aid may be a binaural hearing aid. The hearing instrument may be a hearing protection device or a headset.

It is to be understood that the second inductive coil may be arranged in the base unit for wirelessly transferring energy to the hearing instrument. Thereby, a simple adapter with no electrical circuits and/or contacts is provided for.

In the method, configuring characteristics of the current generated by the base unit so as to correspond to the characteristics of the inductive coil of the hearing instrument is based on the determined characteristics of the inductive coil.

Accordingly, a method for inductively charging a rechargeable hearing instrument having a first inductive coil by means of a charging kit is disclosed, the charging kit comprising a current-generating base unit and an adapter, the base unit comprising a first cavity and a second inductive coil, wherein the adapter is configured to be received in said first cavity, the adapter comprising a second cavity configured to receive the rechargeable hearing instrument and wherein energy is transferrable from the base unit to the hearing instrument when the adapter is received in the first cavity and the hearing instruments is received in the second cavity. The method comprises inserting the hearing instrument into the second cavity of the adapter; inserting the adapter into the first cavity of the base unit; determining characteristics of the first inductive coil of the hearing instrument; configuring, based on the determined characteristics of the first inductive coil, characteristics of the current generated by the base unit so as to correspond to the characteristics of the first inductive coil of the hearing instrument; and inductively charging the rechargeable hearing instrument, optionally according to the characteristics of the current generated by the base unit.

The inductive coil of the hearing instrument may also be denoted first inductive coil.

The inductive coil of the adapter/base unit may also be denoted second inductive coil.

The step of determining characteristics of the (first) inductive coil of the hearing instrument may comprise determining operational frequency of the (first) inductive coil of the hearing instrument. The operational frequency of the (first) inductive coil may be in the range between 1 and 100 kHz.

In the method, determining characteristics of the (first) inductive coil of the hearing instrument may comprise providing information to the base unit about characteristics of the (first) inductive coil of the hearing instrument. Thus, determining characteristics of the (first) inductive coil of the hearing instrument may comprise obtaining characteristics of the (first) inductive coil of the hearing instrument from the hearing instrument and/or from a memory of the base unit. Characteristics of the first inductive coil may comprise one or more of a device ID of the hearing instrument, coil ID of the first inductive coil, and operational frequency of the first inductive coil.

Determining operational frequency of the (first) inductive coil may comprise the hearing instrument providing information to the base unit about the operational frequency of the (first) inductive coil of the hearing instrument. Thus, determining operational frequency of the (first) inductive coil may comprise obtaining/receiving information about the operational frequency of the (first) inductive coil of the hearing instrument from the hearing instrument.

The hearing instrument providing information to the base unit about the operational frequency of the (first) inductive coil may comprise establishing a wireless connection between the hearing instrument and the base unit, whereby device ID of the hearing instrument is optionally transferred to the base unit. Thus, one or more exemplary methods comprise, e.g. as part of providing/obtaining information to the base unit about the operational frequency of the first inductive coil, obtaining information about the operational frequency of the first inductive coil of the hearing instrument from the hearing instrument. Obtaining information about the operational frequency of the first inductive coil may comprise establishing a wireless connection between the hearing instrument and the base unit and receiving device ID of the hearing instrument from the hearing instrument, e.g. by the hearing instrument transmitting one or more of a device ID of the hearing instrument, coil ID of the first inductive coil, and operational frequency of the first inductive coil.

The device ID of the hearing instrument may be used to select an operational frequency value from a set of operation frequency values stored in a memory of the base unit, whereupon AC current at the selected operational frequency is supplied to the inductive coil of the adapter.

Determining operational frequency of the (first) inductive coil may further comprise supplying AC current to the (second) inductive coil of the adapter according to a charging scheme comprising supplying AC current at at least two different frequencies.

The charging scheme may be discontinued if the inductive energy supply to the hearing instrument results in that the energy level of the battery of the rechargeable hearing instrument increases by a value that exceeds a predetermined energy amount. The predetermined energy amount may be in the range from 2 mAh to 20 mAh, e.g. 10 mAh.

The method may comprise the step of resetting the base unit and/or the adapter. The hearing instrument and the base unit and/or the adapter may be connected via a 2.4 GHz wireless link. The hearing instrument and the base unit may be connected via a 2.4 GHz wireless link. The hearing instrument and the adapter may be connected via a 2.4 GHz wireless link. The base unit and the adapter may be connected via a 2.4 GHz wireless link.

The figures are schematic and simplified for clarity, and they merely show details which are essential to the understanding of the invention, while other details have been left out. Throughout, the same reference numerals are used for identical or corresponding parts.

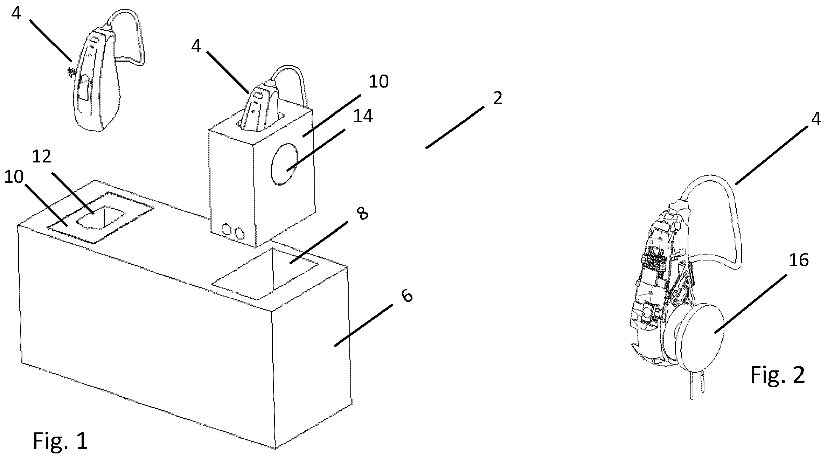

Fig. 1 is a perspective view of a charging kit for an inductively-charged hearing instrument and a rechargeable hearing instrument itself. The shown kit comprises a base unit 6 and two adapters 10. The two inductively-charged hearing instruments 4 are also shown, both are hearing aids of the BTE-type. One BTE-device is inserted into the adapter and the other is positioned above the inserted adapter. Here, it is to be understood that many different ear-worn devices such as traditional hearing aids, tinnitus maskers, non-prescription hearing aids and others, all are encompassed by the employed omnibus term hearing instrument.

As it may be seen in Fig. 1, the base unit 6 optionally has two oppositely positioned cavities 8, arranged at the respective end of the base unit housing. Obviously, a base unit holding a single cavity 8 is equally conceivable. Each shown cavity may receive a corresponding adapter.

Given its considerable size and system constraints as discussed above, it is desirable to fit as many system components as possible in the base unit. Thus, base unit 6 typically holds some/all of the following components: a charging circuit, a current converter, a radio receiver, a USB-socket and a battery and a display for displaying charging time and/or remaining charging time and/or charging level. By virtue of the present disclosure, a single base unit may be used for charging across the entire product portfolio of hearing instruments, as all base units are identical, both in terms of appearance as well as the components integrated therein. It is an important advantage of the present disclosure that a charging system (base unit and/or adapter) with few charging coils (second inductive coil) is provided for.

The adapter 10, on the other hand, is to be as simple as possible while conforming to the requirements imposed by the hearing instrument 4. The adapter 10 optionally has a coil 14 (second inductive coil) suitable for inductively transferring energy to the coil 16 of the hearing instrument 4 (shown in Fig. 2). Here, the process of inductive charging of the hearing instrument is based on electro-inductive phenomena well known to the person skilled in the art. In one or more exemplary methods and/or system, the second inductive coil forms a part of the base unit. The adapter 10 typically has metallic contacts. The base unit 6 has similar contacts for electrically connecting the base unit and the adapter. The metallic contacts of the adapter and the base unit are in mutual contact when the adapter 10 is received in the cavity 8 of the base unit 6. In consequence, electrical energy may galvanically be transferred from the base unit 6 to the adapter 10. In one or more embodiments, these metallic contacts are magnetized for easier establishment of the galvanic connection between the adapter and the base unit.

Fig. 2 is a perspective view of a coil 16 of an inductively-charged hearing instrument 4 of the BTE-type. When the hearing instrument is inserted in the cavity 12 of the adapter, the two coils 14, 16 face one another. Further, for modern BTE-devices of standard size, the optimal distance between the two inductive coils 14, 16 is less than 3,0 mm, more preferred less than 2,5 mm and most preferred less than 2,0 mm. It is desirable to keep the distance as short as possible. This results in the best possible energy transfer. Normally, the centers of the first and the second disc-shaped inductive coils are aligned in a direction substantially perpendicular to the coil planes, when the hearing instrument 4 is received in the cavity 8 of the base unit 6.

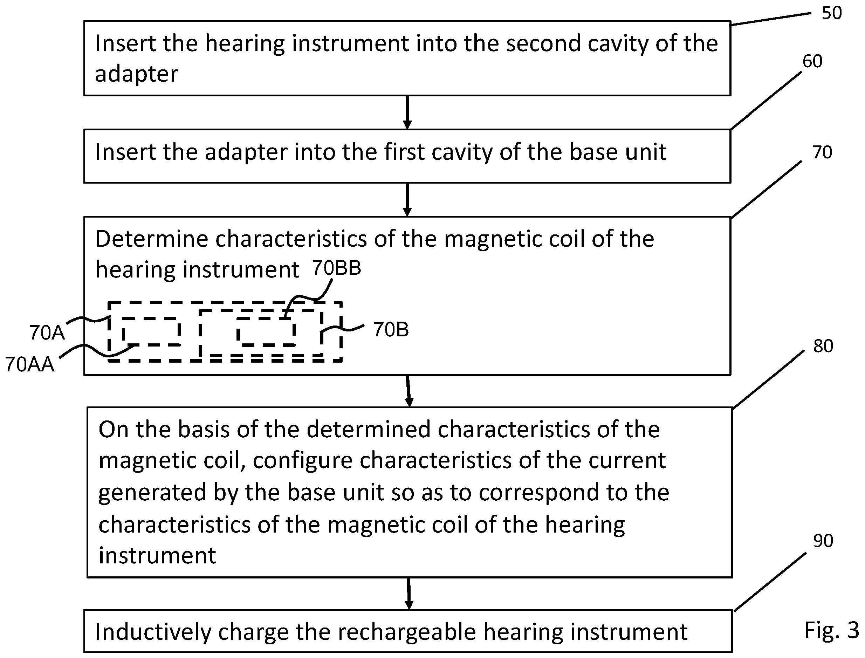

Fig. 3 shows a flow chart of the method for inductively charging a rechargeable hearing instrument according to one embodiment of the invention. Hardware used for inductive charging has been described in connection with Fig. 1. In the following, method steps are discussed in greater detail.

Firstly, the hearing instrument is inserted 50 into the second cavity of the adapter. Subsequently, the adapter is inserted 60 into the first cavity of the base unit. It is to be understood that the adapter may be inserted into the first cavity prior to or simultaneously with inserting the hearing instrument into the second cavity. Further, characteristics of the inductive coil of the hearing instrument are determined 70. After that and on the basis of the determined characteristics of the first inductive coil, characteristics of the current generated by the base unit are configured 80 so as to correspond to the characteristics of the first inductive coil of the hearing instrument. Finally, the rechargeable hearing instrument is inductively charged 90.

By receiving relevant information regarding characteristics of the (first) inductive coil integrated in the hearing instrument, the base unit may configure 80 the characteristics of the current it generates, i.e. the current generated by the base unit for charging the hearing instrument, so that it corresponds to the characteristic of the inductive coil integrated in the hearing instrument. In this way, a single base unit may be used for charging across the entire product portfolio of hearing instruments, as all base units (holding the majority of the required components) are identical, whereas the adapters are HI-specific and typically differ in shape and positioning of the inductive coil.

In one or more embodiments, the step of determining 70 characteristics of the inductive coil of the hearing instrument comprises determining 70A operational frequency of the inductive coil, i.e. the frequency of the AC current that results in optimal inductive energy transfer from the adapter coil to the HI-coil.

Determining 70A operational frequency of the inductive coil entails that the hearing instrument provides information 70B to the base unit about its operational frequency, i.e. the operational frequency of the first inductive coil. In one variant, normally when the battery of the inserted hearing instrument is partially charged, this results in establishment 70BB of a wireless connection between the inserted hearing instrument and the base unit, whereby device ID of the hearing instrument is transferred to the base unit. The transferring of the device ID takes place using techniques well known to the artisan. In this context, the hearing instrument and the base unit are connected via a 2.4 GHz wireless link, such as Bluetooth. The device ID of the hearing instrument is used at the base unit to select an operational frequency value from a set of operation frequency values stored in a memory of the base unit. Subsequently, AC current at the selected operational frequency is supplied to the inductive coil of the adapter. Inductive energy transfer between the adapter coil and the HI-coil then takes place with maximum efficiency as the operational frequency of the AC current flowing in the adapter coil is tailored to suit the coil integrated in the hearing instrument.

In one or more exemplary embodiments, typically when the battery of the hearing instrument is fully discharged, determining operational frequency of the inductive coil comprises supplying 70AA AC current to the inductive coil of the adapter according to a charging scheme comprising supplying AC current at at least two different frequencies. As a consequence, the battery is charged by energy pulses carried by AC current at different frequencies. For each pulse, the battery might become more charged. This efficiency of this process depends on degree of matching between the operational frequency of the coil integrated in the hearing instrument and the frequency of the instant AC current flowing through the adapter coil. The charging scheme is discontinued if the inductive energy supply to the hearing instrument for a given instant AC current results in that the energy level of the battery of the rechargeable hearing instrument increases by a value that exceeds a predetermined energy amount. Such an increase suggests that the instant AC current is a perfect match for the coil integrated in the hearing instrument. Subsequently, the hearing instrument provides information to the base unit about its operational frequency, as described above. In one or more embodiments, the predetermined energy amount is in the range from 2 mAh to 20 mAh, e.g 10 mAh.

In certain situations, it may be beneficial to reset the base unit, e.g. if an error has occurred. For instance, after that a wrong hearing instrument had been placed in the adapter. Thus, the method may comprise resetting the base unit and/or the adapter, e.g. in accordance with an error criterion being satisfied and/or in accordance with determining that charging is completed. Charging may be completed if it is detected that the adapter and/or the hearing instrument is removed from the base unit. Accordingly, the method may comprise determining if an error has occurred, e.g. by determining if an error criterion is satisfied.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

Although features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. In the drawings and specification, typical preferred embodiments of the invention are disclosed and, although specific terms are employed, they are used in a generic and descriptive sense only and not for purposes of limitation, the scope of the invention being set forth in the following claims.

### LIST OF REFERENCES

- 2: charging kit
- 4: hearing instrument
- 6: current-generating base unit
- 8: first cavity
- 10: adapter
- 12: second cavity
- 14: inductive coil of adapter
- 16: inductive coil of hearing instrument
- 50: inserting the hearing instrument into the second cavity of the adapte
- 60: inserting the adapter into the first cavity of the base unit
- 70: determining characteristics of the inductive coil of the hearing instrument
- 70A: determining operational frequency of the inductive coil of the hearing instrument
- 70AA: supplying AC current to the inductive coil of the adapter according to a charging scheme
- 70B: providing information to the base unit about its operational frequency
- 70BB: establishing a wireless connection between the hearing instrument and the base unit
- 80: configuring characteristics of the current generated by the base unit
- 90: inductively charging the rechargeable hearing instrument

## Claims

1. A charging kit for inductively charging a rechargeable hearing instrument (4) having an inductive coil (16), said charging kit (2) comprising:
- a current-generating base unit (6) comprising a first cavity (8),
- an adapter (10) adapted to be received in said first cavity (8), wherein energy is transferrable from the base unit (6) to the adapter (10) when the adapter (10) is received in the first cavity (8), the adapter (10) further being provided with an inductive coil (14), and wherein the adapter comprises a second cavity (12) adapted to receive the rechargeable, inductively-charged hearing instrument (4),
- wherein when the adapter (10) is received in the first cavity (8) and the hearing instrument (4) is received in the second cavity (12) the charging kit is configured to determine (70) characteristics of the inductive coil (16) of the hearing instrument (4),
- wherein the charging kit is further configured to on the basis of the determined characteristics of the inductive coil (16), configure (80) characteristics of the current generated by the base unit (6) so as to correspond to the characteristics of the inductive coil (16) of the hearing instrument (4), and
- wherein the charging kit is further configured to inductively charge (90) the rechargeable hearing instrument (4).

2. Charging kit according to claim 1, wherein determine characteristics of the inductive coil (16) of the hearing instrument (4) comprises determine operational frequency of the inductive coil (16) of the hearing instrument.

3. Charging kit according to claim 2, wherein the operational frequency of the inductive coil (16) is in the range between 1 and 100 kHz.

4. Charging kit according to claim 2 or 3, wherein determine operational frequency of the inductive coil (16) comprises the hearing instrument (4) providing information to the base unit (6) about the operational frequency of the inductive coil (16).

5. Charging kit according to claim 4, wherein the hearing instrument (4) providing information to the base unit (6) about the operational frequency of the inductive coil (16) comprises establishing a wireless connection between the hearing instrument (4) and the base unit (6), whereby device ID of the hearing instrument (4) is transferred to the base unit (6).

6. Charging kit according to claim 5, wherein device ID of the hearing instrument (4) is used to select an operational frequency value from a set of operation frequency values stored in a memory of the base unit (6), whereupon AC current at the selected operational frequency is supplied to the inductive coil (14) of the adapter (10).

7. Charging kit according to any of the preceding claims, wherein determine operational frequency of the inductive coil (16) further comprises supplying AC current to the inductive coil (14) of the adapter (10) according to a charging scheme comprising supplying AC current at at least two different frequencies.

8. Charging kit according to claim 7, wherein said charging scheme is discontinued if the inductive energy supply to the hearing instrument (4) results in that the energy level of the battery of the rechargeable hearing instrument (4) increases by a value that exceeds a predetermined energy amount.

9. Charging kit according to claim 8, wherein the predetermined energy amount is 10 mAh.

10. Charging kit according to any of the preceding claims, wherein the charging kit is further configured to reset the base unit (6) and/or the adapter (10).

11. Charging kit according to any of the claims 5 - 10, wherein the hearing instrument (4) and the base unit (6) and/or the adapter (10) are connected via a 2.4 GHz wireless link.

12. Charging kit according to any of the preceding claims, wherein the adapter (10) has metallic contacts, and the base unit (6) has similar contacts for electrically connecting the base unit and the adapter.

13. Charging kit according to claim 12, wherein the metallic contacts of the adapter and the base unit are in mutual contact when the adapter (10) is received in the cavity (8) of the base unit (6).

14. Charging kit according to any of the preceding claims, wherein the base-unit (6) and the adapter (10) is separable parts.

15. Method for inductively charging a rechargeable hearing instrument (4) having an inductive coil (16) by means of a charging kit (2), said charging kit (2) comprising: a current-generating base unit (6) comprising a first cavity (8), an adapter (10) adapted to be received in said first cavity (8), wherein energy is transferrable from the base unit (6) to the adapter (10) when the adapter (10) is received in the first cavity (8), the adapter (10) further being provided with an inductive coil (14), and wherein the adapter comprises a second cavity (12) adapted to receive the rechargeable, inductively-charged hearing instrument (4), the method comprising the steps of: inserting (50) the hearing instrument (4) into the second cavity (12) of the adapter (10), inserting (60) the adapter (10) into the first cavity (8) of the base unit (6), determining (70) characteristics of the inductive coil (16) of the hearing instrument (4), on the basis of the determined characteristics of the inductive coil (16), configuring (80) characteristics of the current generated by the base unit (6) so as to correspond to the characteristics of the inductive coil (16) of the hearing instrument (4), inductively charging (90) the rechargeable hearing instrument (4).

## Patentansprüche

1. Ein Ladekit zum induktiven Laden eines wiederaufladbaren Hörgeräts (4) mit einer Induktionsspule (16), wobei das Ladekit (2) Folgendes umfasst:
- eine stromerzeugende Basiseinheit (6) mit einem ersten Hohlraum (8),
- ein Adapter (10), der zur Aufnahme in den ersten Hohlraum (8) geeignet ist, wobei Energie von der Basiseinheit (6) auf den Adapter (10) übertragen werden kann, wenn der Adapter (10) im ersten Hohlraum (8) aufgenommen wird, wobei der Adapter (10) ferner mit einer Induktionsspule (14) versehen ist und einen zweiten Hohlraum (12) aufweist, der zur Aufnahme des wiederaufladbaren, induktiv geladenen Hörgeräts (4) geeignet ist,
- wobei, wenn der Adapter (10) in der ersten Kammer (8) und das Hörgerät (4) in der zweiten Kammer (12) aufgenommen werden, das Ladekit so konfiguriert ist, dass es die Eigenschaften (70) der Induktionsspule (16) des Hörgeräts (4) ermittelt,
- wobei das Ladekit ferner so konfiguriert ist, dass es auf der Grundlage der ermittelten Eigenschaften der Induktionsspule (16) die Eigenschaften (80) des von der Basiseinheit (6) erzeugten Stroms so konfiguriert, dass sie den Eigenschaften der Induktionsspule (16) des Hörgeräts (4) entsprechen, und
- wobei das Ladekit ferner so konfiguriert ist, dass es das wiederaufladbare Hörgerät (4) induktiv lädt (90).

2. Ladekit nach Anspruch 1, wobei die Bestimmung der Eigenschaften der Induktionsspule (16) des Hörgeräts (4) die Bestimmung der Betriebsfrequenz der Induktionsspule (16) des Hörgeräts umfasst.

3. Ladekit nach Anspruch 2, wobei die Betriebsfrequenz der Induktionsspule (16) im Bereich zwischen 1 und 100 kHz liegt.

4. Ladekit nach Anspruch 2 oder 3, wobei die Bestimmung der Betriebsfrequenz der Induktionsspule (16) darin besteht, dass das Hörgerät (4) der Basiseinheit (6) Informationen über die Betriebsfrequenz der Induktionsspule (16) übermittelt.

5. Ladekit nach Anspruch 4, wobei das Hörgerät (4), das der Basiseinheit (6) Informationen über die Betriebsfrequenz der Induktionsspule (16) übermittelt, eine drahtlose Verbindung zwischen dem Hörgerät (4) und der Basiseinheit (6) herstellt, wobei die Geräte-ID des Hörgeräts (4) an die Basiseinheit (6) übertragen wird.

6. Ladekit nach Anspruch 5, wobei die Geräte-ID des Hörgeräts (4) verwendet wird, um einen Betriebsfrequenzwert aus einem im Speicher der Basiseinheit (6) gespeicherten Satz von Betriebsfrequenzwerten auszuwählen, woraufhin Wechselstrom mit der ausgewählten Betriebsfrequenz an die Induktionsspule (14) des Adapters (10) angelegt wird.

7. Ladekit nach einem der vorhergehenden Ansprüche, wobei die Bestimmung der Betriebsfrequenz der Induktionsspule (16) ferner das Zuführen von Wechselstrom an die Induktionsspule (14) des Adapters (10) nach einem Ladeschema umfasst, das das Zuführen von Wechselstrom mit mindestens zwei verschiedenen Frequenzen beinhaltet.

8. Ladekit nach Anspruch 7, wobei das Ladeschema abgebrochen wird, wenn die induktive Energiezufuhr zum Hörgerät (4) dazu führt, dass der Energiepegel der Batterie des wiederaufladbaren Hörgeräts (4) um einen Wert ansteigt, der einen vorbestimmten Energiebetrag überschreitet.

9. Ladekit nach Anspruch 8, wobei die vorbestimmte Energiemenge 10 mAh beträgt.

10. Ladekit nach einem der vorhergehenden Ansprüche, wobei das Ladekit ferner so konfiguriert ist, dass es die Basiseinheit (6) und/oder den Adapter (10) zurücksetzt.

11. Ladekit nach einem der Ansprüche 5 bis 10, wobei das Hörgerät (4) und die Basiseinheit (6) und/oder der Adapter (10) über eine 2,4-GHz-Funkverbindung verbunden sind.

12. Ladekit nach einem der vorhergehenden Ansprüche, wobei der Adapter (10) metallische Kontakte aufweist und die Basiseinheit (6) ähnliche Kontakte zum elektrischen Verbinden der Basiseinheit und des Adapters aufweist.

13. Ladekit nach Anspruch 12, wobei die metallischen Kontakte des Adapters und der Basiseinheit in gegenseitigem Kontakt stehen, wenn der Adapter (10) in den Hohlraum (8) der Basiseinheit (6) eingesetzt wird.

14. Ladekit nach einem der vorhergehenden Ansprüche, wobei die Basiseinheit (6) und der Adapter (10) trennbare Teile sind.

15. Verfahren zum induktiven Laden eines wiederaufladbaren Hörgeräts (4) mit einer Induktionsspule (16) mittels eines Ladekits (2), wobei das Ladekit (2) Folgendes umfasst: eine stromerzeugende Basiseinheit (6) mit einem ersten Hohlraum (8), einen Adapter (10), der in den ersten Hohlraum (8) eingesetzt werden kann, wobei Energie von der Basiseinheit (6) auf den Adapter (10) übertragen wird, sobald dieser im ersten Hohlraum (8) eingesetzt ist, wobei der Adapter (10) zusätzlich mit einer Induktionsspule (14) versehen ist, und einen zweiten Hohlraum (12) zur Aufnahme des wiederaufladbaren, induktiv geladenen Hörgeräts (4), wobei das Verfahren die folgenden Schritte umfasst: Einsetzen (50) des Hörgeräts (4) in den zweiten Hohlraum (12) des Adapters (10), Einsetzen (60) des Adapters (10) in den ersten Hohlraum (8) der Basiseinheit (6), Bestimmen (70) der Eigenschaften der Induktionsspule (16) des Hörgeräts (4) auf der Grundlage der ermittelten Eigenschaften die Induktionsspule (16), die die Eigenschaften (80) des von der Basiseinheit (6) erzeugten Stroms so konfiguriert, dass sie den Eigenschaften der Induktionsspule (16) des Hörgeräts (4) entsprechen, und das wiederaufladbare Hörgerät (4) induktiv lädt (90).

## Revendications

1. Un kit de charge pour la charge par induction d'un appareil auditif rechargeable (4) comportant une bobine inductive (16), ledit kit de charge (2) comprenant:
- une unité de base génératrice de courant (6) comprenant une première cavité (8),
- un adaptateur (10) adapté pour être reçu dans ladite première cavité (8), dans lequel l'énergie est transférable de l'unité de base (6) à l'adaptateur (10) lorsque l'adaptateur (10) est reçu dans la première cavité (8), l'adaptateur (10) étant en outre muni d'une bobine inductive (14), et dans lequel l'adaptateur comprend une seconde cavité (12) adaptée pour recevoir l'instrument auditif rechargeable et chargé par induction (4),
- dans lequel, lorsque l'adaptateur (10) est reçu dans la première cavité (8) et que l'appareil auditif (4) est reçu dans la deuxième cavité (12), le kit de charge est configuré pour déterminer (70) les caractéristiques de la bobine inductive (16) de l'appareil auditif (4),
- dans lequel le kit de charge est en outre configuré pour, sur la base des caractéristiques déterminées de la bobine inductive (16), configurer (80) les caractéristiques du courant généré par l'unité de base (6) de manière à correspondre aux caractéristiques de la bobine inductive (16) de l'appareil auditif (4), et
- dans lequel le kit de charge est en outre configuré pour charger par induction (90) l'instrument auditif rechargeable (4).

2. Kit de charge selon la revendication 1, dans lequel déterminer les caractéristiques de la bobine inductive (16) de l'appareil auditif (4) comprend la détermination de la fréquence de fonctionnement de la bobine inductive (16) de l'appareil auditif.

3. Kit de charge selon la revendication 2, dans lequel la fréquence de fonctionnement de la bobine inductive (16) est comprise entre 1 et 100 kHz.

4. Kit de charge selon la revendication 2 ou 3, dans lequel la détermination de la fréquence de fonctionnement de la bobine inductive (16) comprend l'appareil auditif (4) fournissant des informations à l'unité de base (6) sur la fréquence de fonctionnement de la bobine inductive (16).

5. Kit de charge selon la revendication 4, dans lequel l'appareil auditif (4) fournissant des informations à l'unité de base (6) sur la fréquence de fonctionnement de la bobine inductive (16) comprend l'établissement d'une connexion sans fil entre l'appareil auditif (4) et l'unité de base (6), par laquelle l'identifiant de l'appareil auditif (4) est transféré à l'unité de base (6).

6. Kit de charge selon la revendication 5, dans lequel l'identifiant de l'appareil auditif (4) est utilisé pour sélectionner une valeur de fréquence de fonctionnement parmi un ensemble de valeurs de fréquence de fonctionnement stockées dans une mémoire de l'unité de base (6), sur laquelle un courant alternatif à la fréquence de fonctionnement sélectionnée est fourni à la bobine inductive (14) de l'adaptateur (10).

7. Kit de charge selon l'une quelconque des revendications précédentes, dans lequel la détermination de la fréquence de fonctionnement de la bobine inductive (16) comprend en outre la fourniture d'un courant alternatif à la bobine inductive (14) de l'adaptateur (10) selon un schéma de charge comprenant la fourniture d'un courant alternatif à au moins deux fréquences différentes.

8. Kit de charge selon la revendication 7, dans lequel ledit schéma de charge est interrompu si l'alimentation en énergie inductive de l'instrument auditif (4) entraîne une augmentation du niveau d'énergie de la batterie de l'instrument auditif rechargeable (4) d'une valeur supérieure à une quantité d'énergie prédéterminée.

9. Kit de charge selon la revendication 8, dans lequel la quantité d'énergie prédéterminée est de 10 mAh.

10. Kit de charge selon l'une quelconque des revendications précédentes, dans lequel le kit de charge est en outre configuré pour réinitialiser l'unité de base (6) et/ou l'adaptateur (10).

11. Kit de chargement selon l'une quelconque des revendications 5 à 10, dans lequel l'appareil auditif (4) et l'unité de base (6) et/ou l'adaptateur (10) sont connectés via une liaison sans fil de 2,4 GHz.

12. Kit de charge selon l'une quelconque des revendications précédentes, dans lequel l'adaptateur (10) comporte des contacts métalliques et l'unité de base (6) comporte des contacts similaires pour connecter électriquement l'unité de base et l'adaptateur.

13. Kit de charge selon la revendication 12, dans lequel les contacts métalliques de l'adaptateur et de l'unité de base sont en contact mutuel lorsque l'adaptateur (10) est reçu dans la cavité (8) de l'unité de base (6).

14. Kit de charge selon l'une quelconque des revendications précédentes, dans lequel l'unité de base (6) et l'adaptateur (10) sont des pièces séparables.

15. Procédé de charge par induction d'un appareil auditif rechargeable (4) doté d'une bobine d'induction (16) au moyen d'un kit de charge (2), ledit kit de charge (2) comprenant : une unité de base génératrice de courant (6) comportant une première cavité (8), un adaptateur (10) conçu pour être inséré dans ladite première cavité (8), l'énergie étant transférable de l'unité de base (6) à l'adaptateur (10) lorsque ce dernier est inséré dans la première cavité (8), l'adaptateur (10) étant en outre muni d'une bobine d'induction (14), et comportant une seconde cavité (12) conçue pour recevoir l'appareil auditif rechargeable (4), le procédé comprenant les étapes suivantes : insertion (50) de l'appareil auditif (4) dans la seconde cavité (12) de l'adaptateur (10), insertion (60) de l'adaptateur (10) dans la première cavité (8) de l'unité de base (6), détermination (70) des caractéristiques de la bobine d'induction (16) de l'appareil auditif (4), à partir des caractéristiques déterminées de la bobine inductive (16), configurant (80) les caractéristiques du courant généré par l'unité de base (6) de manière à correspondre aux caractéristiques de la bobine inductive (16) de l'appareil auditif (4), chargeant par induction (90) l'appareil auditif rechargeable (4).
